# EUROPÄISCHE PATENTSCHRIFT

(11) **EP 1 786 578 B1**
(45) Veröffentlichungstag und Bekanntmachung des Hinweises auf die Patenterteilung: **21.05.2008**
(21) Anmeldenummer: 05783947.4
(22) Anmeldetag: 31.08.2005
(51) Int. Cl.: B21C 23/00, B21C 23/18

(54) **VERFAHREN UND VORRICHTUNG ZUR KORREKTUR EINES SCHRÄGENFEHLERS EINES POLYGONALEN PROFILS, INSBESONDERE EINES FLANKENRICHTUNGSFEHLERS EINER VERZAHNUNG**
METHOD AND DEVICE FOR CORRECTING THE BEVEL ERROR OF A POLYGONAL PROFILE, IN PARTICULAR A GEAR TOOTH ALIGNMENT ERROR
DISPOSITIF ET PROCEDE DE CORRECTION D'UNE ERREUR D'OBLIQUITE D'UN PROFIL POLYGONAL, NOTAMMENT D'UNE ERREUR DE DIRECTION DE DENT D'UNE DENTURE

(30) Priorität: 02.09.2004 DE 102004042917
(43) Veröffentlichungstag der Anmeldung: 23.05.2007
(73) Patentinhaber: Felss GmbH, 75203 Königsbach-Stein (DE)
(72) Erfinder: GRUPP, Philipp, 75245 Neulingen (DE)
(74) Vertreter: Leitner, Waldemar
(86) Internationale Anmeldenummer: PCT/EP2005/009356
(87) Internationale Veröffentlichungsnummer: WO 2006/024505

(56) Entgegenhaltungen:
- EP-A- 1 003 616
- DE-U1- 8 910 726
- US-A- 5 732 586

## Beschreibung

Die Erfindung betrifft ein Verfahren und eine Vorrichtung zur Korrektur eines Schrägenfehlers eines polygonalen Profils, insbesondere eines Flankenrichtungsfehlers einer Verzahnung, wobei die Vorrichtung zur Korrektur des Schrägenfehlers, insbesondere des Flankenrichtungsfehlers einer Verzahnung, in dem Werkstück eine Spanneinrichtung für das Werkstück, ein Werkzeug und mindestens eine Vorschubeinrichtung aufweist, durch die eine Relativbewegung zwischen dem Werkstück und dem Werkzeug erzeugbar ist, und wobei die Vorrichtung eine Führungseinrichtung für das Werkzeug und/oder die Spanneinrichtung aufweist, durch die eine als Kompensationsbewegung wirkende Drehbewegung des Werkzeugs und/oder der Spanneinrichtung um eine in Vorschubrichtung verlaufende Achse des Werkstücks durchführbar ist, welche der in Axialrichtung des Werkstücks verlaufenden Relativbewegung zwischen Werkstück und Werkzeug überlagerbar ist

Ein Verfahren zum Ausbilden eines polygonalen Profils und eine zur Durchführung des Verfahrens geeignete Vorrichtung sind bekannt. Bei den bekannten Verfahren und bekannten Vorrichtungen tritt in nachteiliger Art und Weise bei einigen Anwendungsfällen, insbesondere wenn einzelne Verzahnungssegmente der herzustellenden Verzahnung jeweils durch einen nicht-verzahnten, tailierten Abschnitt getrennt sind, das Problem auf, dass die Verzahnungen nicht mehr geradlinig verlaufen, sondern eine leichte helixartige Struktur aufweisen. Dies kann z. B. durch ein Spiel in der Führung des Werkstücks und/oder des Umformwerkzeugs, durch Fehler im Umformwerkzeug selbst oder durch eine Relativbewegung zwischen Werkstück und Umformwerkzeug, die auftritt, während das Umformwerkzeug den tailierten Bereich zwischen zwei Verzahnungssegmenten durchläuft, hervorgerufen werden.

In der DE 89 10 726 U1 ist eine Maschine zum Feinbearbeiten von Zahnflanken von verzahnten Werkstücken mit einem zahnradartigen Werkzeug beschrieben, dass mit einem Werkstück in einem Walzeingriff steht, bei der das Werkstück ortsfest, aber drehbar auf einem Maschinenbett gelagert ist und das Werkzeug in einem Werkzeugkopf drehbar aufgenommen ist. Der Werkzeugkopf ist um eine horizontale, rechtwinkelig zur Werkstückachse gerichtete Einstellachse dreheinstellbar und um eine rechtwinkelig zur Einstellachse und zur Werkstückachse gerichtete Schwenkachse schwenkbar, wobei der Werkzeugkopf mit dem Werkzeug in zwei horizontalen Richtungen relativ zum Werkstück bewegbar ist, und zwar sowohl rechtwinklig zur Werkstückachse als auch parallel zu ihr. Außerdem ist vorgesehen, dass der Werkzeugkopf mit dem Werkzeug zusätzlich zu den beiden Bewegungen auch in vertikaler Richtung bewegbar ist.

Die Vorrichtung der WO-A-9908813, EP-A-1003616 weist eine Spanneinrichtung für das Werkstück, ein Werkzeug und mindestens eine Vorschubeinrichtung zur Erzeugung einer Relativbewegung in Axialrichtung zwischen dem Werkstück und dem Werkzeug.

Es ist Aufgabe der vorliegenden Erfindung, ein Verfahren und eine Vorrichtung der eingangs genannten Art derart weiterzubilden, dass Schrägenfehler eines polygonalen Profils, insbesondere Flankenrichtungsfehler einer Verzahnung, eliminiert oder zumindest reduziert werden.

Diese Aufgabe wird erfindungsgemäß durch ein Verfahren gemäß Anspruch 1 zur Korrektur eines Schrägenfehlers eines polygonalen Profils, insbesondere eines Flankenrichtungsfehlers einer Verzahnung, in einer Vorrichtung gemäß Anspruch 9 zum Ausbilden des polygonalen Profils in einem Werkstück, wobei die Vorrichtung eine Spanneinrichtung für das Werkstück, ein Werkzeug und mindestens eine Vorschubeinrichtung zur Erzeugung einer Relativbewegung zwischen dem Werkstück und dem Werkzeug aufweist, wobei der in einer Axialrichtung des Werkstücks verlaufenden Relativbewegung zwischen Werkstück und Werkzeug eine als Kompensationsbewegung wirkende Drehbewegung des Werkzeugs und/oder der Spanneinrichtung überlagert wird, gelöst.

Zur Lösung der oben genannten Aufgabe sieht die erfindungsgemäße Vorrichtung vor, dass die Führungseinrichtung eine Winkeleinstellungseinrichtung aufweist, die ein Führungselement besitzt, welches unter einem Anstellwinkel gegenüber der Achse des Werkstücks anstellbar ist.

Durch die erfindungsgemäßen Maßnahmen wird somit in vorteilhafter Art und Weise ein Verfahren und eine Vorrichtung geschaffen, welches sich dadurch auszeichnet, dass in vorteilhafter Art und Weise eine Korrektur, sei es eine Elimination oder eine Reduktion, von Schrägenfehler eines polygonalen Profils, insbesondere Flankenrichtungsfehler einer Verzahnung, durchgeführt werden kann.

Vorteilhafte Weiterbildungen der Erfindung sind Gegenstand der Unteransprüche.

Weitere Einzelheiten und Vorteile der Erfindung sind den beiden Ausführungsbeispielen zu entnehmen, die im folgenden anhand der Figuren beschrieben werden. Es zeigen:
- Figur 1:: eine Seitenansicht eines ersten Ausführungsbeispiels einer Vorrichtung,
- Figur 2:: eine Ansicht gemäß der Linie A-A der Figur 1,
- Figur 3:: eine Ansicht gemäß der Linie B-B der Figur 1,
- Figur 4:: eine Seitenansicht eines zweiten Ausführungsbeispiel einer Vorrichtung,
- Figur 5:: eine Ansicht gemäß der Linie A-A der Figur 4, und
- Figur 6:: eine Ansicht gemäß der Linie B-B der Figur 4.

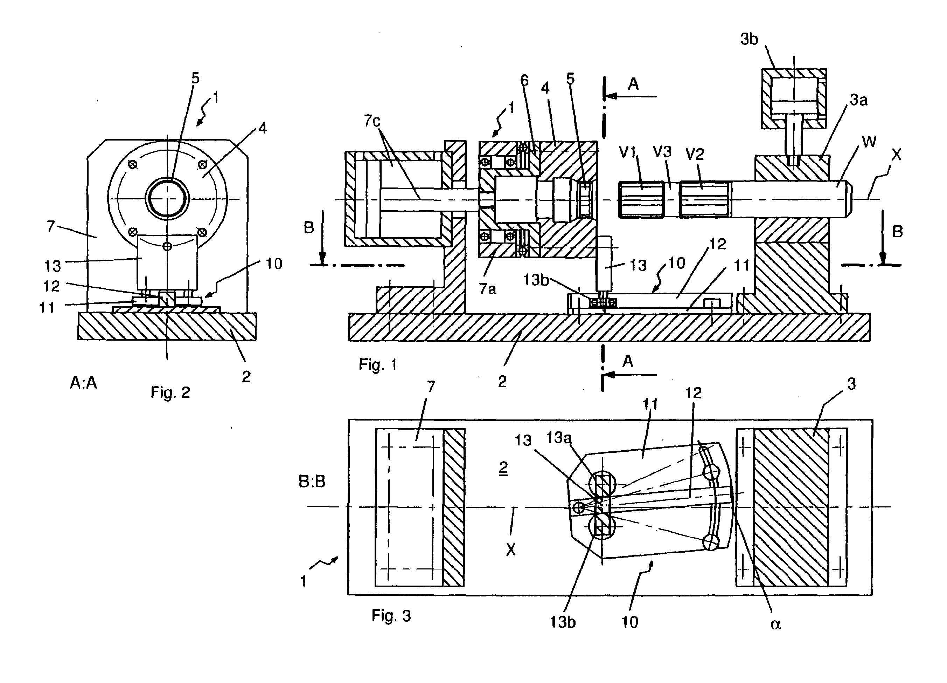

In den Figuren 1-3 ist nun ein erstes Ausführungsbeispiel einer allgemein mit 1 bezeichneten Vorrichtung zur Flankenrichtungsfehler-Korrektur dargestellt, welches sich insbesondere für einen Einsatz in dem anhand der Vorrichtung 1 beschriebenen Verfahren eignet. Mit der Vorrichtung 1 soll in ein Werkstück W eine Außenverzahnung V eingebracht werden, welche zwei Verzahnungssegmente V1 und V2 aufweist, die durch einen nicht-verzahnten Bereich V3 voneinander getrennt sind. Das Werkstück W ist in einer auf eine Grundplatte 2 angeordneten Spanneinrichtung 3 gespannt, wobei die Spanneinrichtung 3 im hier beschriebenen Fall Spannbacken 3a aufweist, die von einem hydraulischen Spannzylinder 3b beaufschlagt werden. Dem Fachmann ist aber aus nachfolgender Beschreibung klar ersichtlich, dass eine derartige Ausbildung der Spanneinrichtung 3 nicht zwingend erforderlich ist. Vielmehr ist es ausreichend, dass durch die Spanneinrichtung 3 das Werkstück W hinreichend fixierbar ist, so dass es während des darauffolgendes Umformvorgangs, in dem die Verzahnung V hergestellt wird, hinreichend ortsfest positioniert ist.

Die Vorrichtung 1 weist des weiteren ein allgemein 4 bezeichnetes Umformwerkzeug auf, das hier als Matrize ausgebildet ist, und auf die herzustellende Verzahnung V abgestimmte Umformelemente 5 besitzt. Im hier beschriebenen Fall ist das Umformwerkzeug 4 als ein spanlos umformendes Werkzeug ausgebildet. Dem Fachmann ist aber klar ersichtlich, dass die Vorrichtung 1 sowie das von ihr durchgeführte Verfahren nicht nur bei einer spanlosen Umformung, sondern auch bei einer spanenden Umformung, z. B. durch die Verwendung eines Räumwerkzeuges, eingesetzt werden kann. Die Einfachheit der Beschreibung halber wird aber nachfolgend von einem Umformwerkzeug 4 gesprochen, wobei unter diesem Begriff sowohl spanende als auch spanlos arbeitende Werkzeuge zu verstehen sind.

Das Umformwerkzeug 4 ist mitttels eines drehbaren Adapters 6 an einer Vorschubeinrichtung 7 angeordnet, mittels derer das Umformwerkzeug 4 relativ zum Werkstück W in dessen Axialrichtung verschiebbar ist, so dass durch die Umformelemente 5 des Umformwerkzeugs 4 die Verzahnung V des Werkstücks W herstellbar ist. Im hier beschriebenen Fall weist die auf der Grundplatte 2 montierte Vorschubeinrichtung 7 eine auf einem Kolben 7c eines hydraulischen Vorschubzylinders 7b angeordnete Basis 7a auf, auf der der Adapter 6 drehbar gelagert ist.

Um nun eine Korrektur von Flankenrichtungsfehlern der Verzahnung V, die insbesondere aus den eingangs genannten Gründen entstehen können, durchführen zu können, ist vorgesehen, dass im hier beschriebenen Ausführungsbeispiel das Umformwerkzeug 4 um die Achse X des Werkstücks W gedreht wird. Hierzu weist die Vorrichtung 1 eine Führungseinrichtung 10 für das über den Adapter 6 drehbar auf der Basis 7a der Vorschubeinrichtung 7 gelagerte Umformwerkzeug 4 auf, welche bewirkt, dass infolge des Vorschubs des Umformwerkzeugs 4 durch die Vorschubeinrichtung 7 das Umformwerkzeug 4 eine als Kompensationsbewegung wirkende Drehbewegung um die Achse X des Werkstücks W und somit um die Vorschubrichtung der Einrichtung 7 durchführt. Hierdurch wird erreicht, dass eine ansonsten bei der Vorrichtung 1 auftretende, in einem Flankenrichtungsfehler resultierende helixartige Struktur der Verzahnung V kompensiert wird.

Um diese Zwangskopplung zwischen der Vorschubbewegung des Umformwerkzeugs 4 und dessen Drehbewegung um die Achse X durch die Führungseinrichtung 10 durchführen zu können, ist beim beschriebenen Ausführungsbeispiel vorgesehen, dass - wie am besten aus Figur 3 ersichtlich ist - auf der Grundplatte 2 der Vorrichtung 1 eine Winkeleinstelleinrichtung 11 der Führungseinrichtung 10 angeordnet ist, die ein Führungselement 12, insbesondere ein entsprechend verlaufendes Führungslineal, besitzt, welches gegenüber der Vorschubrichtung der Vorschubeinrichtung 7 unter einem gewissen Winkel α geneigt verläuft. Das Führungselement 12 führt Führungsrollen 13a, 13b eines mit dem Umformwerkzeug 4 drehfest verbundenen weiteren Führungselements 13 der Führungseinrichtung 10. Wird nun das Umformwerkzeug 4 von der Vorschubeinrichtung 7 in Richtung des Werkstücks W bewegt, so bewirkt die schräge Anordnung des Führungselements 12 der Führungseinrichtung 10 eine Verdrehung des Umformwerkzeugs 4 und somit eine Korrektur der ansonsten auftretenden Flankenrichtungsfehlers.

Der Anstellwinkel α des Führungselements 12 wird dabei derart ermittelt, dass in einem ersten Arbeitsschritt des Verfahrens in ein Test-Werkstück W bei einem in Richtung X verlaufenden Führungselement 12 (α=o) eine Verzahnung V ausgebildet wird. Dann wird anhand dieser Probeverzahnung der Flankenrichtungsfehler ermittelt und in einer für den Fachmann bekannten Art und Weise aus diesem Flankenrichtungsfehler der zur Korrektur erforderliche Anstellwinkel α des Führungselements 12 bestimmt. Das Führungselement 12 wird dann entsprechend ausgerichtet und die durch diese Ausrichtung erzielte Korrektur des Flankenrichtungsfehlers anhand eines erneuten Test-Werkstücks überprüft. Der Anstellwinkel α wird dann gegebenenfalls solange nachjustiert, bis die gewünschte Korrektur erzielt wird. Es ist auch denkbar, bei komplexen Fehlern statt eines linearen Führungselements 12 ein Führungselement 12 mit einer entsprechend gearteten Führungskurve zu verwenden.

Von besonderem Vorteil ist es hierbei, wenn die Vorschubsbewegung nicht stetig, sondern frequenzmoduliert erfolgt, wie z. B. im europäischen Patent EP 1 003 616 der Anmelderin beschrieben ist. In diesem Fall wird dann bevorzugt, dass die Vorschubeinrichtung 7 eine Frequenzerzeugungseinrichtung (nicht gezeigt) aufweist, durch welche die von der Vorschubeinrichtung 7 erzeugte Relativbewegung zwischen dem Werkstück W und dem Umformwerkzeug 4 derart modulierbar ist, dass nach einem Vorwärtshub, in dem das Umformwerkzeug 4 einen ersten Hubweg durchläuft, in einem darauffolgenden Rückwärtshub eine Bewegung des Umformwerkzeugs 4 in einer der ursprünglichen Vorschubrichtung entgegengesetzten Richtung um einen zweiten Hubweg durchgeführt wird. Es wird hierbei bevorzugt, dass der bei einem Vorwärtshub in Vorschubrichtung zurückgelegte erste Hubweg größer als der beim darauffolgenden Rückwärtshub zurückgelegte zweite Hubweg ist, wobei insbesondere von Vorteil ist, dass der erste Hubweg etwa doppelt so groß ist als der beim Rückwärtshub durchlaufene zweite Hubweg. Bezüglich weiterer Einzelheiten eines derartigen frequenzmodulierten Vorschubs wird auf die vorgenannte europäische Patentschrift verwiesen, deren Offenbarung durch diese Bezugnahme zum Gegenstand der vorliegenden Anmeldung gemacht wird.

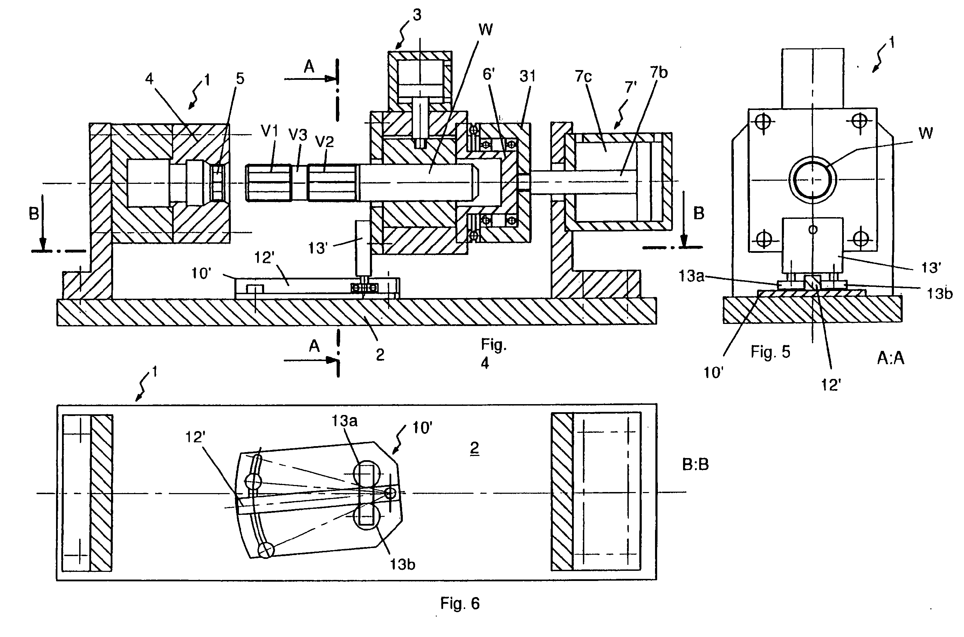

In den Figuren 4-6 ist nun ein zweites Ausführungsbeispiel einer Vorrichtung 1 dargestellt. Aneinander entsprechende Bauteile der beiden Ausführungsbeispiele werden mit den gleichen Bezugsziffern versehen und nicht mehr näher im Detail beschrieben. Der wesentliche Unterschied zwischen dem ersten und dem zweiten Ausführungsbeispiel ist nun, dass nicht - wie beim ersten Ausführungsbeispiel - das Umformwerkzeug 4 vorgeschoben und zumindest während des Umformvorgangs um seine Achse gedreht wird, sondern dass das Werkstück W vorgeschoben und bei der Ausformung der Verzahnung V eine entsprechende Kompensationsdrehung durchführt. Dies wird dadurch erreicht, dass die das Werkstück W fixierende Spanneinrichtung 3 mittels eines dem Adapter 6 des ersten Ausführungsbeispiels entsprechenden Adapters 6' auf einer Basis 31 gelagert ist und durch eine der Vorschubeinrichtung 7 entsprechende Vorschubeinrichtung 7' vorgeschoben wird.

Ein dem weiteren Führungselement 13 der Führungseinrichtung 10 des ersten Ausführungsbeispiels entsprechendes weiteres Führungselement 13' der Führungseinrichtung 10' greift dann auf der drehbar angeordneten Spanneinheit 3 an und bewirkt derart deren Drehung zur Kompensation von Flankenfehlern.

Bei den beiden vorstehend beschriebenen Ausführungsbeispielen wird nun davon ausgegangen, dass diejenie Komponente der Vorrichtung 1, welche vorgeschoben wird, also entweder das Umformwerkzeug 4 oder die Spanneinrichtung 3, die Kompensationsdrehung ausführt. Es ist aber auch möglich, dass die Kompensationsdrehung von der nicht-vorgeschobenen Komponente durchgeführt wird, d. h., dass z. B. das Umformwerkzeug 4 vorgeschoben wird und die Spanneinrichtung 3 und somit das Werkstück W die Kompensationsdrehung zur Vermeidung von helixartigen Flankenrichtungsfehlern durchführt, oder umgekehrt. Des weiteren ist es möglich, dass beide Komponenten, nämlich das Umformwerkzeug 4 und die Spanneinrichtung 3 zueinander bewegt werden, und entweder die Spanneinrichtung 3 oder das Umformwerkzeug 4 die Kompensationsdrehung durchführt. Ebenso ist es denkbar, dass sowohl das Umformwerkzeug 4 als auch die Spanneinrichtung 3 jeweils eine Teil-Kompensationsdrehung durchführen, deren Überlagerung dann die gewünschte Kompensationsdrehung in bezug auf das Werkstück W ergibt.

Die beiden Ausführungsbeispiele wurden anhand des speziellen Falls der Korrektur von Flankenrichtungsfehler einer Verzahnung V, und zwar einer Außenverzahnung, beschrieben. Das beschriebene Verfahren ist aber nicht auf die Korrektur des Flankenrichtungsfehlers einer Außenverzahnung bestimmt. Ebenso ist es möglich, Flankenrichtungsfehler einer Innenverzahnung eines hohlen Werkstücks durchzuführen. Dem Fachmann ist aus obiger Beschreibung auch ersichtlich, dass die Vorrichtung 1 und das Verfahren des weiteren nicht auf die Korrektur von Flankenrichtungsfehlern einer Verzahnung V beschränkt sind. Vielmehr ist es mit der beschriebenen Vorrichtung 1 und dem erläuterten Verfahren möglich, allgemein Schrägenfehler von polygonalen Profilen zu korrigieren.

## Patentansprüche

1. Verfahren zur Korrektur eines Schrägenfehlers eines polygonalen Profils, insbesondere eines Flankenrichtungsfehlers einer Verzahnung (V), in einer Vorrichtung zum Ausbilden des polygonalen Profils in einem Werkstück (W), wobei die Vorrichtung (1) eine Spanneinrichtung (3) für das Werkstück (W), ein Werkzeug (4) und mindestens eine Vorschubeinrichtung (7, 7') zur Erzeugung einer Relativbewegung zwischen dem Werkstück (W) und dem Werkzeug (4) aufweist, wobei der in einer Axialrichtung des Werkstücks (W) verlaufenden Relativbewegung zwischen Werkstück (W) und Werkzeug (4) eine als Kompensationsbewegung wirkende Drehbewegung des Werkzeugs (4) und/oder der Spanneinrichtung überlagert wird.

2. Verfahren nach einem der vorangehenden Ansprüche, **dadurch gekennzeichnet, dass** das Werkzeug (4) von der Vorschubeinrichtung (7) vorgeschoben wird.

3. Verfahren nach einem der vorangehenden Ansprüche, **dadurch gekennzeichnet, dass** die das Werkstück (W) spannende Spanneinrichtung (3) von der Vorschubeinrichtung (7') vorgeschoben wird.

4. Verfahren nach einem der vorangehenden Ansprüche, **dadurch gekennzeichnet, dass** durch die Vorschubeinrichtung (7) des Werkzeugs (4) und/oder durch die Vorschubeinrichtung (7') der Spanneinrichtung (3) eine frequenzmodulierte Vorschubsbewegung erzeugt wird.

5. Verfahren nach Anspruch 4, **dadurch gekennzeichnet, dass** nach einem Vorwärtshub, in dem das Werkzeug (4) und/oder die Spanneinrichtung (3) einen ersten Hubweg durchläuft, in einem darauffolgenden Rückwärtshub eine Bewegung des Werkzeugs (4) und/oder der Spanneinrichtung (3) in einer der ursprünglichen Vorschubseinrichtung entgegengesetzten Richtung um einen zweiten Hubweg durchgeführt wird.

6. Verfahren nach Anspruch 4 oder 5, **dadurch gekennzeichnet, dass** der erste Hubweg größer als der beim darauffolgenden Rückwärtshub zurückgelegte zweite Hubweg ist.

7. Verfahren nach einem der vorangehenden Ansprüche, **dadurch gekennzeichnet, dass** eine Zwangskopplung zwischen der Kompensationsbewegung des Werkzeugs (4) und/oder der Spanneinrichtung (3) und der Relativbewegung zwischen Werkzeug (4) und Werkstück (W) durchgeführt wird.

8. Verfahren nach einem der vorangehenden Ansprüche, **dadurch gekennzeichnet, dass** als Werkzeug (4) ein spanlos arbeitendes Umformwerkzeug verwendet wird.

9. Vorrichtung zur Korrektur eines Schrägenfehlers, eines Profils, insbesondere eines Flankenrichtungsfehlers einer Verzahnung (V), in einem Werkstück (W), wobei die Vorrichtung (1) eine Spanneinrichtung (3) für das Werkstück (W), ein Werkzeug (4) und mindestens eine Vorschubeinrichtung (7, 7') aufweist, die durch eine Relativbewegung zwischen dem Werkstück (W) und dem Werkzeug (4) erzeugbar ist, dass die Vorrichtung eine Führungseinrichtung (10, 10') für das Werkzeug (4) und/oder die Spanneinrichtung (3) aufweist, durch die eine als Kompensationsbewegung wirkende Drehbewegung des Werkzeugs (4) und/oder der Spanneinrichtung (3) um eine in Vorschubrichtung verlaufende Achse (X) des Werkstücks (W) durchführbar ist, welche der in Axialrichtung des Werkstücks (W) verlaufenden Relativbewegung zwischen Werkstück (W) und Werkzeug (4) überlagerbar ist, wobei die Führungseinrichtung (10, 10') eine Winkeleinstellungseinrichtung (11, 11') aufweist, die ein Führungselement (12, 12') besitzt, welches unter einem Anstellwinkel (α) gegenüber der Achse (X) des Werkstücks (W) anstellbar ist.

10. Vorrichtung nach Anspruch 9, **dadurch gekennzeichnet, dass** die durch die Führungseinrichtung (10, 10') eine Zwangskopplung zwischen der Vorschubbewegung des Werkzeugs (4) und/oder der Spanneinrichtung (3) und der Kompensationsbewegung des Werkzeugs (4) und/oder der Spanneinrichtung (3) bewirkt ist.

11. Vorrichtung nach einem der Ansprüche 9 oder 10, **dadurch gekennzeichnet, dass** die Führungseinrichtung (10, 10') ein weiteres Führungselement (13, 13') besitzt, welches einerseits am Umformwerkzeug (6) oder an der Spanneinrichtung (3) und andererseits am Führungselement (12, 12') angreift.

12. Vorrichtung nach einem der Ansprüche 9 bis 11, **dadurch gekennzeichnet, dass** die Vorrichtung eine mit der Vorschubeinrichtung (7, 7') zusammenwirkende Frequenzerzeugungseinrichtung aufweist, durch die die von der Vorschubeinrichtung (7, 7') erzeugte Relativbewegung zwischen Werkstück (W) und Werkzeug (4) derart modulierbar ist, dass nach einem Vorwärtshub, bei dem das Werkstück (W) und/oder das Werkzeug (4) in der Vorwärtsrichtung einen ersten Hubweg durchläuft, in einem darauffolgenden Rückwärtshub eine Bewegung des Werkzeugs (4) und/oder des Werkstücks (W) in einer der Vorschubeinrichtung (7, 7') entgegengesetzten Richtung um einen zweiten Hubweg durchführbar ist.

13. Vorrichtung nach einem der Ansprüche 9 bis 12, **dadurch gekennzeichnet, dass** das Werkzeug (4) ein spanlos arbeitendes Umformwerkzeug ist.

## Claims

1. Method for correcting a bevel error of a polygonal profile, in particular a flank alignment error of a toothing (V), in a device for forming the polygonal profile in a workpiece (W), in a device for providing a polygonal profile in a workpiece (W) wherein the device (1) comprises a clamping device (3) for the workpiece (W), a tool (4), and at least one feeding unit (7, 7') for effecting a relative movement between the workpiece (W) and the tool (4), and wherein the relative movement between the workpiece (W) and the tool (4) in an axial direction of the workpiece (W) a rotational movement, acting as a compensating movement, of at least one of the tool (4) and the clamping device (3) is superposed.

2. Method according to the preceding claim, **characterized in that** the tool (4) is advanced by the feeding unit (7).

3. Method according to one of the preceding claims, **characterized in that** the clamping device (3) clamping the workpiece (W) is advanced by the feeding unit (7').

4. Method according to one of the preceding claims, **characterized in that** a frequency-modulated feeding movement is effected by at least one of the feeding unit (7) of the tool (4) and the feeding unit (7') of the clamping device (3).

5. Method according to claim 4, **characterized in that**, after an advance stroke, during which at least one of the tool (4) and the clamping device (3) travels a first stroke length, during a subsequent return stroke a movement of at least one of the tool (4) and the clamping device (3) by a second stroke length is performed in a direction opposite to the original feeding direction.

6. Method according to claim 4 or 5, **characterized in that** the first stroke length is larger than the second stroke length covered during the subsequent return stroke.

7. Method according to one of the preceding claims, **characterized in that** a forced coupling is implemented between the compensating movement of at least one of the tool (4) and the clamping device (3) and the relative movement between the tool (4) and the workpiece (W).

8. Method according to one of the preceding claims, **characterized in that** a non-cutting forming tool is used as a tool (4).

9. Device for correcting a bevel error of a profile, in particular a flank alignment error of a toothing (V), in a workpiece (W), wherein the device (1) comprises a clamping device (3) for the workpiece (W), a tool (4) and at least one feeding unit (7, 7'), by which a relative movement between the workpiece (W) and the tool (4) can be effected, wherein the device comprises a guidance means (10, 10') for at least one of the tool (4) and the clamping device (3), by which guidance means (10, 10') a rotating movement of at least one of the tool (4) and the clamping device (3), the rotating movement acting as a compensating movement, can be effected around an axis (X) of the workpiece (W) extending along a feeding direction, wherein the guidance means (10, 10') comprises an angle adjustment unit (11, 11') which has a guidance element (12, 12') which can be inclined relative to the axis (X) of the workpiece (W) by an angle of inclination (α).

10. Device according to claim 9, **characterized in that** a forced coupling between the feeding movement of at least one of the tool (4) and the clamping device (3) and the compensating movement of at least one of the tool (4) and the clamping device (3) is caused by the guidance means (10, 10').

11. Device according to one of claims 9 or 10, **characterized in that** the guidance means (10, 10') comprises another guidance element (13, 13'), which on the one hand engages the tool (4) or the clamping device (3) and on the other hand engages the guidance element (12, 12').

12. Device according to one of claims 9 to 11, **characterized in that** the device comprises a frequency-generating unit cooperating with the feeding unit (7, 7'), by which frequency-generating unit the relative movement between the workpiece (W) and the tool (4) effected by the feeding device (7, 7') can be modulated in such a way, that after an advance stroke, during which at least one of the workpiece (W) and the tool (4) travels a first stroke length in the forward direction, in a subsequent return stroke a movement of at least one of the tool (4) and the workpiece (W) by a second stroke length can be performed in a direction opposite to the feeding device (7, 7').

13. Device according to one of claims 9 to 12, **characterized in that** the tool (4) is a non-cutting forming tool.

## Revendications

1. Procédé pour la correction d'une erreur d'obliquité d'un profil polygonal, en particulier d'une erreur d'alignement des dents d'une denture (V) dans un dispositif pour la réalisation du profil polygonal dans une pièce à usiner (W), dans lequel le dispositif (1) présente un mécanisme de serrage (3) pour la pièce à usiner (W), un outil (4) et au moins un mécanisme d'avance (7, 7') pour obtenir un mouvement relatif entre la pièce à usiner (W) et l'outil (4), dans lequel, au mouvement relatif s'étendant dans la direction axiale de la pièce à usiner (W) entre la pièce à usiner (W) et l'outil (4) on superpose un mouvement rotatif de l'outil (4) et/ou un du mécanisme de serrage agissant à la manière d'un mouvement de compensation.

2. Procédé selon l'une quelconque des revendications précédentes, **caractérisé en ce que** le mécanisme d'avance (7) fait avancer l'outil (4).

3. Procédé selon l'une quelconque des revendications précédentes, **caractérisé en ce que** le mécanisme d'avance (7') fait avancer le mécanisme de serrage (3) qui serre la pièce à usiner (3).

4. Procédé selon l'une quelconque des revendications précédentes, **caractérisé en ce que** le mécanisme d'avance (7) de la pièce à usiner 4 et/ou le mécanisme d'avance (7') du mécanisme de serrage (3) génère un mouvement d'avance modulé en fréquence.

5. Procédé selon la revendication 4, **caractérisé en ce que**, après une course vers l'avant au cours de laquelle l'outil (4) et/ou ou le mécanisme de serrage (3) parcourent une première longueur de course, lors d'une course vers l'arrière qui y fait suite, un mouvement de l'outil (4) et/ou du mécanisme de serrage (3) est mis en oeuvre sur une deuxième longueur de course dans une direction opposée à la longueur de course initiale du mécanisme d'avance.

6. Procédé selon la revendication 4 ou 5, **caractérisé en ce que** la première longueur de course est supérieure à la deuxième longueur de course parcourue lors de la course vers l'arrière qui y fait suite.

7. Procédé selon l'une quelconque des revendications précédentes, **caractérisé en ce que** l'on obtient un couplage forcé entre le mouvement de compensation de l'outil (4) et/ou le mécanisme de serrage (3) et le mouvement relatif entre l'outil (4) et la pièce à usiner (W).

8. Procédé selon l'une quelconque des revendications précédentes, **caractérisé en ce qu'**on utilise, à titre d'outil (4), un outil de façonnement travaillant sans copeaux.

9. Dispositif pour la correction d'une erreur d'obliquité, d'un profil, en particulier d'une erreur d'alignement des dents d'une denture (V), dans une pièce à usiner (W), dans lequel le dispositif (1) présente un mécanisme de serrage (3) pour la pièce à usiner (W), un outil (4) et au moins un mécanisme d'avance (7, 7') qui peut être obtenu via un mouvement relatif entre la pièce à usiner (W) et l'outil (4), en ce que le dispositif présent un mécanisme de guidage (10, 10') pour l'outil (4) et/ou pour le mécanisme de serrage (3), par lequel on peut mettre en oeuvre mouvement rotatif, faisant office de mouvement de compensation, de l'outil (4) et/ou du mécanisme de serrage (3) autour d'un axe (X) de la pièce à usiner (W) s'étendant dans la direction d'avance, ledit mouvement pouvant être superposé au mouvement relatif entre la pièce à usiner (W) et l'outil (4) s'étendant dans la direction axiale de la pièce à usiner (W), le mécanisme de guidage (10, 10') présentant un mécanisme de réglage angulaire (11, 11') qui possède un élément de guidage (12, 12') qui peut être réglé via un angle de réglage (α) par rapport à l'axe (X) de la pièce à usiner (X) .

10. Dispositif selon la revendication 9, **caractérisé en ce que**, via le mécanisme de guidage (10, 10'), on obtient un couplage forcé entre le mouvement d'avance de l'outil (4) et/ou du mécanisme de serrage (3) et le mouvement de compensation de l'outil (4) et/ou du mécanisme de serrage (3).

11. Dispositif selon l'une quelconque des revendications 9 ou 10, **caractérisé en ce que** le mécanisme de guidage (10, 10') possède un élément de guidage supplémentaire (13, 13') qui agit d'une part sur l'outil de façonnement (6) ou sur le mécanisme de serrage (3) et d'autre part sur l'élément de guidage (12, 12').

12. Dispositif selon l'une quelconque des revendications 9 à 11, **caractérisé en ce que** le dispositif présente un mécanisme de génération de fréquence coopérant avec le mécanisme d'avance (7, 7'), par lequel le mouvement relatif entre la pièce à usiner (W) et l'outil (4), généré par le mécanisme d'avance (7, 7') peut être modulé de telle sorte que, après une course vers l'avant, au cours de laquelle la pièce à usiner (W) et/ou l'outil (4) parcourent une première longueur de course, lors d'une course vers l'arrière qui y fait suite, un mouvement de l'outil (4) et/ou de la pièce à usiner (4) est mis en oeuvre sur une deuxième longueur de course dans une direction opposée à celle du mécanisme d'avance (7, 7').

13. Dispositif selon l'une quelconque des revendications 9 à 12, **caractérisé en ce que** l'outil (4) est un outil de façonnement travaillant sans copeaux.
